Europäisches Patentamt

European Patent Office

Office européen des brevets

(11) Veröffentlichungsnummer : **0 118 020**
**B1**

(12) **EUROPÄISCHE PATENTSCHRIFT**

(45) Veröffentlichungstag der Patentschrift :
30.12.86

(21) Anmeldenummer : 84100975.6

(22) Anmeldetag : 01.02.84

(51) Int. Cl.⁴ : **F 01 D   5/28**

(54) **Keramische Turbinenschaufel mit metallenem Stützkern.**

(30) Priorität : 26.02.83 DE 3306896

(43) Veröffentlichungstag der Anmeldung :
12.09.84 Patentblatt 84/37

(45) Bekanntmachung des Hinweises auf die Patenterteilung : 30.12.86 Patentblatt 86/52

(84) Benannte Vertragsstaaten :
AT BE CH DE FR GB IT LI SE

(56) Entgegenhaltungen :
DE-A- 2 834 843
DE-B- 2 945 531
DE-C-   736 958
FR-A-   999 820
FR-E-    56 147
FR-E-    57 426

(73) Patentinhaber : MTU MOTOREN- UND TURBINEN-UNION MÜNCHEN GMBH
Dachauer Strasse 665 Postfach 50 06 40
D-8000 München 50 (DE)

(72) Erfinder : Rossmann, Axel, Ing. grad.
Bachweg 4
D-8047 Karlsfeld (DE)

## Beschreibung

Die Erfindung betrifft eine heißgasbeaufschlagte Turbinenschaufel mit metallenem Stützkern (4) und umgebendem keramischen Schaufelblatt (2), wobei der Stützkern an seinem radial inneren Ende an der Turbinenscheibe formschlüssig gehalten ist und an seinem radial äußeren Ende einen erweiterten Kopf (3) aufweist, an dem sich an radial inneren Flächen (5) das keramische Schaufelblatt (2) des Kopfes (3) in radialer Richtung abstützt, wobei die radial inneren Flächen (5) des Kopfes (3) so ausgebildet sind, daß eine Hinterschneidung entsteht. Aus der DE-A-2 834 843 ist eine Turbinenschaufel gemäß dem Oberbegriff von Patentanspruch 1 bekannt. Dort sollen sich Kern und Schaufelblatt unabhängig voneinander dehnen können, jedoch ist die Hinterschneidung hakenförmig ausgebildet, so daß ein konvexer mit einem konkaven Teil zusammengehalten wird.

Aufbauend auf diesem vorgenannten Stand der Technik ist es Aufgabe der Erfindung, eine heißgasbeaufschlagte Turbinenschaufel der vorgenannten Art zu schaffen, bei der die Kräfteverhältnisse im Schaufelblatt besser beherrschbar sind.

Gelöst wird die der Erfindung zugrunde liegende Aufgabe dadurch, daß

a) an dem Kopf (3) und am keramischen Schaufelblatt (2) korrespondierende Gleitflächen (5, 7) ausgebildet sind,

b) die Gleitflächen (5, 7) sich im wesentlichen über den ganzen Umfang des keramischen Schaufelblattes (2) erstrecken,

c) die Gleitflächen (5, 7) unter einem Winkel ($\gamma$) zur Achse der Turbinenscheibe geneigt sind, so daß eine schwalbenschwanzartige Hintergreifung (6) entsteht, wodurch die Druckkräfte im Betrieb auf das keramische Schaufelblatt (2) quer zur Schaufelachse ausgeübt werden.

Eine vorteilhafte Weiterbildung der Erfindung sieht vor, daß die schwalbenschwanzartige Hintergreifung axialsymmetrisch ausgebildet ist.

Insbesondere kann bei einem Schaufelprofil der Winkel $\gamma$ über dem Umfang so variiert werden, daß eine geeignete optimale Spannungsverteilung am Schaufelblatt erreicht wird.

Der Winkel der Auflagefläche in Bezug auf die Turbinenachse liegt vorteilhafterweise im Bereich von 10 bis 70°.

Zusätzlich kann in erfindungsgemäßer Ausgestaltung durch geeignete Beschichtung der Gleitfläche auf der Metallseite der Reibungskoeffizient vermindert werden.

Hierfür wird erfindungsgemäß auf der schwalbenschwanzartigen Hintergreifung des Kopfes eine keramische Spritzschicht aufgetragen, die auch für eine gute Wärmeisolation sorgt und eine Anpassung der Eingriffsteile im Mikrobereich ermöglicht. Eine geeignete Spritzschicht aus Keramik ist zweckmäßigerweise Zirkonoxid.

In alternativer Ausgestaltung können zwecks Verbesserung der Reibungs- und Wärmeverhältnisse an der schwalbenschwanzartigen Hintergreifung dünne isolierende Zwischenlagen angeordnet sind, die bevorzugt aus Aluminiumtitanat bestehen.

Die keramische Spritzschicht bzw. die isolierende Zwischenlage ist zweckmäßigerweise den Stützkopf vollständig umgreifend ausgebildet bzw. angeordnet, d. h. herumgezogen, so daß ein direkter Kontakt des Metalls mit den Heißgasen und damit eine unzulässige Aufheizung vermieden wird.

Eine andere Ausführungsform der Erfindung kennzeichnet sich dadurch, daß das keramische Schaufelblatt im Bereich der schwalbenschwanzartigen Hintergreifung des Kopfes einen radial äußeren erhabenen Kragen aufweist, der mit dem Schaufelblatt einstückig ausgebildet ist. Der metallische Haltekopf wird mithin durch eine hochgezogene Partie des Keramikschaufelblattes zusätzlich abgeschirmt.

Der Haltekopf braucht nicht dem Profil der Schaufel zu entsprechen. Vielmehr kann in zweckmäßiger Ausgestaltung der Erfindung der Kopf in Draufsicht elliptisch oder kreisrund und kleiner als das Schaufelblattprofil ausgebildet sein.

Falls das Profil des metallischen Haltekopfes das Schaufelblattprofil deutlich überragt, kann zweckmäßigerweise eine Integration in ein äußeres Deckband vorgenommen werden.

Zwar wird in DE-A-28 34 843 bereits eine besondere Gestaltung der Verbindung einer-Metall/Keramik-Hybridschaufel beschrieben, es handelt sich hierbei jedoch um eine hakenförmige, d. h. mit sphärisch gekrümmten Konturen im (spaltfreien) Formschluß gestaltete Verklammerung zwischen Keramikblatt und Metallkern zur Fixierung des geteilten Schaufelblattes. Eine derartige Gestaltung kann keine definierten Druckspannungen unter Fliehkraft über Keilwirkung und Gleitbewegungen erzeugen, wie dies nach der Erfindung der Fall ist, bei der es sich nicht um sphärisch gekrümmte Hinterschneidungen handelt, sondern um Gleitflächen, die aus einer in Richtung der Schaufelachse wirkenden Kraft Druckspannungen auf das Schaufelblatt entstehen lassen.

Die Erfindung wird nachfolgend anhand von Ausführungsbeispielen unter Bezugnahme auf die Zeichnung näher beschrieben ; es zeigt :

Figur 1 den Stützkopfbereich einer erfindungsgemäßen Turbinenschaufel in schematischer Darstellung,

Figur 2 den Stützkopfbereich in anderer Ausgestaltung,

Figur 3 eine Einzelheit einer Weiterbildung der Erfindung,

Figur 4 in schematischer Darstellung eine Draufsicht auf ein keramisches Schaufelblatt mit elliptisch im Querschnitt ausgebildetem Stützkopf,

Figur 5 eine der Fig. 4 ähnliche Darstellung mit in kreisrundem Querschnitt ausgebildetem Stützkopf,

Figur 6 einen metallenen Stützkopf in perspektivischer Darstellung, wobei der radial äußere Bereich des Kopfes einen größeren Querschnitt aufweist als das zugehörige Schaufelblatt.

Figur 7 eine Turbinenschaufel bei der der Stötzkopf in das Deckband fest eingebaut ist.

Figur 8 einen Querschnitt durch einen mit einer oberen Halterung verbundenen Befestigungsbolzen als Stützkern und mit einer Einlage zwischen Kern und Schaufelblatt.

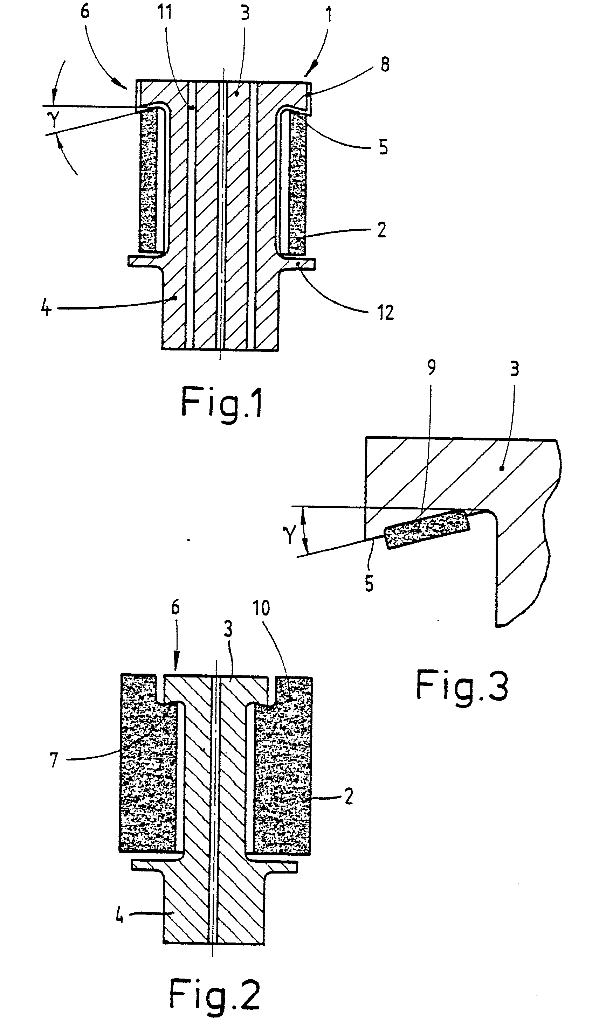

Gemäß Fig. 1 weist die dargestellte heißgasbeaufschlagte Turbinenschaufel 1 einen metallischen Stützkern 4 auf, dessen radial äußerer Teil einen erweiterten Kopf 3 mit radial voneinander beabstandeten Flanschbereichen 6, 12 besitzt. Als Kernwerkstoffe haben sich besonders bewährt Superlegierungen insbesondere solche auf Nickelbasis. Bevorzugt werden Gußteile aus diesen Legierungen insbesondere mit gerichteter Erstarrung derselben, aber auch geschmiedete oder pulvermetallurgisch hergestellte oder insbesondere einkristalline Werkstoffe sind für den Kern gut geeignet. Zwischen den Flanschbereichen 6, 12 der Schaufel 1 ist ein keramisches Schaufelblatt 2 erfindungsgemäß in einer Weise angeordnet wie nachfolgend noch beschrieben wird. Hierfür geeignete Werkstoffe sind insbesondere Siliciumcarbid SiC, Siliciumnitrid $Si_3N_4$, Zirkoniumoxid $ZrO_2$. Die Siliciumcarbide können dabei siliciuminfiltriert sein und das Siliciumnitrid und Zirkoniumoxid entweder dicht- oder reaktionsgesintert sein. Als Herstellverfahren für das keramische Schaufelblatt hat sich besonders das heißisostatische Pressen bewährt.

Eine bevorzugte Ausführung der erfindungsgemäßen Turbinenschaufel ist eine solche mit Luftkühlung. Zu diesem Zweck weist der Stützkern 4 in Fig. 1 sich in Schaufellängsrichtung (radial) erstreckende Kühlkanäle 11 auf.

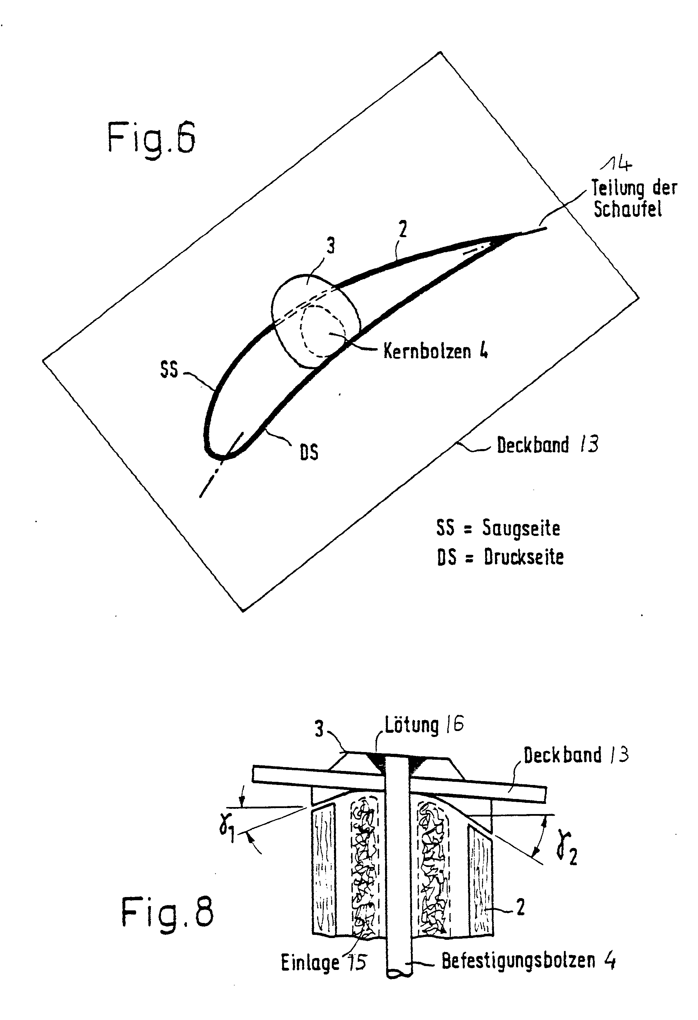

Der radial innere Flanschbereich 12 des Stützkerns 4 verläuft senkrecht zur Längsachse des Stützkerns 4 ; der radial äußere Flanschbereich 6 des Kerns ist in Form einer schwalbenschwanzartigen Hintergreifung ausgebildet, wobei die äußerste Stirnfläche von 3 ebenflächig normal zur Längsachse ist, während die weiter innen liegenden Flächen 5 des Stützkerns 4 bzw. -kopfes 3 unter einem Winkel γ zur Schaufelachse geneigt sind, wie dies im besonderen in Fig. 1 gezeigt ist. An diesen Gleitflächen 5 liegen entsprechend geneigte radial äußere Gleitflächen 7 des Schaufelblatts 2 an. Das Schaufelblatt 2 ist geteilt bei 14 (siehe Fig. 6) und kann in Richtung längs der Gleitflächen geringfügig verschoben werden, gegebenenfalls auch beide Schaufelblatteile relativ zueinander im entgegengesetzten Sinne. Erfindungsgemäß lassen sich beherrschbare Kräfte (Fliehkraft, Wärmedehnungen, Federkräfte, etc.) über Keilwirkung als Druckspannungen auf das Schaufelblatt 2 übertragen, die auftretende Zug- und Schubspannungen im entlastenden Sinne überlagern.

Mit Vorteil ist der Kern 4 mit einer oberen Halterung (z. B. radial äußeres Deckband 13) fest verbunden (Fig. 6).

Durch eine geeignete Gestaltung des Kerns 4 (z. B. Wahl des Querschnitts), insbesondere bolzenartig, läßt sich das Dehnverhalten des metallischen Kerns günstig beeinflussen, d. h. es kann ein räumlich begrenztes Spiel in Schaufellängsrichtung erzielt werden.

Der Stützkern 4 kann zwar unterschiedlich im Querschnitt, jedoch so ausgebildet sein, daß er die Gleitflächen 5, 7 bietet. Das hierauf bewegliche Schaufelblatt 2 gemäß der Erfindung wird dadurch im Betrieb kräftemäßig entlastet und es können unvermeidbare Wärmedehnungsunterschiede zwischen dem Keramikmaterial des Schaufelblatts 2 und dem metallischen Material des Stützkerns 4 gut ausgeglichen werden. Damit werden Rißbildungen am Keramikschaufelblatt wirkungsvoll verhindert. Ferner kann der Stützkern 4 gegenüber Wärmeeinstrahlung vom Schaufelblatt 2 her mittels einer wärmeisolierenden Einlage 15 geschützt werden. Diese Wärmedämmung kann aus Zirkonoxid, Aluminiumtitanat, Magnesium-Aluminiumtitanat oder Lithium-Aluminiumsilicat bestehen in Form einer Faser-, Filz-, Vlies-, Matte oder dergleichen Einlage, die wiederum mit Metallfolie ummantelt ist und eine Wärmestrahlung nach außen reflektierende Oberfläche aufweist.

Die Beherrschung der im Betrieb auftretenden Kräfte wird auch dadurch erleichtert, daß bei einem Schaufelprofil beliebiger Art z. B. « aerofoil », der Winkel γ über den Umfang des Schaufelblattes 2 so variiert werden kann, daß eine geeignete optimale Spannungsverteilung erreicht wird. Der Winkel γ liegt im Bereich von 10 bis 70°. Bei der Ausführung nach Fig. 1 bevorzugt bei etwa 15°. Bei der Ausführung nach Fig. 8 sind im Querschnitt zwei unterschiedliche Winkel γ ersichtlich. Dabei ist der Winkel γ 2 größer als γ 1 in einem Bereich, in dem größere Kräfte, insbesondere Druckspannungen, zu übertragen sind.

Der metallische Stützkern 4 ist am Kopf 3, im Bereich des schwalbenschwanzförmigen Teils 6, mit den Gleitflächen 5 und in dem Gesamtbereich zwischen äußerem und innerem Flanschteil 12, oberflächlich in vorteilhafter Weise, wie Fig. 1 zeigt, mit einer keramischen Spritzschicht 8, z. B. aus Zirkoniumoxid, oder ähnlichen Oxidschichten versehen. Diese Spritzschicht vermindert den Reibungskoeffizienten der radial inneren Gleitflächen 5 auf den Gleitflächen 7. Ebenso wird durch die Spritzschicht 8 eine Anpassung und gute Haftung im Mikrobereich an den metallischen Stützkopf 3 und eine Wärmeisolation erzielt. Ferner soll die Spritzschicht für einen wirkungsvollen Schutz gegen auf den Kopf 3 im Betrieb einwirkende Gasteilchen des verbrannten Heißgases sorgen.

Bei dem in Fig. 2 dargestellten Ausführungsbeispiels der Erfindung sind gegenüber der Ausführung nach Fig. 1 nur geringfügige Unterschiede vorhanden. Das Schaufelblatt 2 besitzt radial äußere Kragen 10, die den metallischen Stützkopf 3 des Stützkerns 4 zusätzlich abschirmen. Wie ersichtlich, sind in Fig. 2 die Formgebung bzw. Dimensionierung des metallischen Kerns 4 und seines ihn umgebenden Schaufelblatts 2 unterschiedlich gewählt zu Fig. 1. Wenigstens ein Kühlkanal sollte jedoch zentral den Stützkern 4 durchsetzen. Die Wahl des Winkels an der schwalbenschwanzartigen Hintergreifung 6 an der Gleitfläche 7 kann auch hier wieder axialsymmetrisch oder über den Umfang verschieden erfolgen (s. Fig. 8).

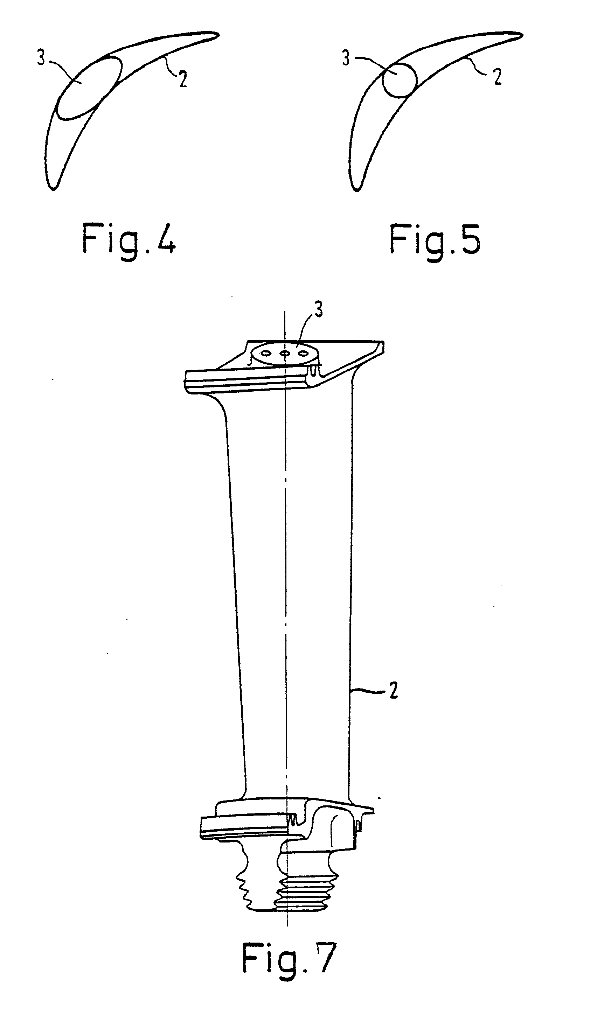

Beim Ausführungsbeispiel nach Fig. 3 ist in die Fläche 5 an den schwalbenschwanzartigen Hintergreifungen des metallischen Stützkopfes 3 eingelassen oder aufgebracht die dünne Schicht 9, z. B. aus Aluminiumtitanat, Eisentitanat, Zirkoniumdioxid oder ähnlich hochfeste keramische Spritzschicht. Diese soll die keramische Spritzschicht 8 des Ausführungsbeispiels nach Fig. 1 wenigstens teilweise ersetzen und besonders für eine geringe Reibung und gute Wärmeisolation zwischen den schwalbenschwanzartigen Hintergreifungen 6 des Stützkopfes 3 und dem Schaufelblatt 2 sorgen. Wie die Figuren 4 bzw. 5 und 6 zeigen, braucht der Stützkern 4 nicht dem Profil des Schaufelblattes 2 oder dessen Hohlraum zu entsprechen, sondern kann auch einen elliptischen, kreisförmigen oder von der Kreisform abweichenden Querschnitt aufweisen.

Falls das Profil des metallischen Stützkopfes 3 dasjenige des Stützkerns 4, wie in Fig. 6 gezeigt, das Schaufelblattprofil 2 deutlich überragt, kann der radial äußere Flanschbereich des Kopfes 3 in ein äußeres Deckband einer Turbine fest eingebaut sein, (Fig. 7) insbesondere durch Hochtemperaturlötung oder -schweißung 16 (Fig. 8).

Die bevorzugte Anwendung der Erfindung ist bei Gasturbinentriebwerken, insbesondere mit Luft gekühlten, geteilten, profilierten Schaufeln, d. h. sowohl bei stationären Gasturbinenanlagen als auch bei Turbinen wie sie in Triebwerken von Flugzeugen verwendet werden.

**Patentansprüche**

1. Heißgasbeaufschlagte Turbinenschaufel mit metallenem Stützkern (4) und umgebendem keramischen Schaufelblatt (2), wobei der Stützkern an seinem radial inneren Ende an der Turbinenscheibe formschlüssig gehalten ist und an seinem radial äußeren Ende einen erweiterten Kopf (3) aufweist, an dem sich an radial inneren Flächen (5) das keramische Schaufelblatt (2) beidseits des Kopfes (3) in radialer Richtung abstützt, wobei die radial inneren Flächen (5) des Kopfes (3) so ausgebildet sind, daß eine Hinterschneidung entsteht, dadurch gekennzeichnet, daß

a) an dem Kopf (3) und am keramischen Schaufelblatt (2) korrespondierende Gleitflächen (5, 7) ausgebildet sind,

b) die Gleitflächen (5, 7) sich im wesentlichen über den ganzen Umfang des keramischen Schaufelblattes (2) erstrecken,

c) die Gleitflächen (5, 7) unter einem Winkel (γ) zur Achse der Turbinenscheibe geneigt sind, so daß eine schwalbenschwanzartige Hintergreifung (6) entsteht, wodurch die Druckkräfte im Betrieb auf das keramische Schaufelblatt (2) quer zur Schaufelachse ausgeübt werden.

2. Turbinenschaufel nach Anspruch 1, dadurch gekennzeichnet, daß die schwalbenschwanzartige Hintergreifung (6) symmetrisch zur Schaufelachse ausgebildet ist.

3. Turbinenschaufel nach Anspruch 1 oder 2, dadurch gekennzeichnet, daß bei einem Schaufelblatt (2) der Winkel (γ) der Gleitflächen (7) des Blatts über den Umfang variiert werden kann, so daß eine optimale Spannungsverteilung am Schaufelblatt (2) erreicht wird.

4. Turbinenschaufel nach Anspruch 3, dadurch gekennzeichnet, daß bei einem Schaufelblatt (2) der Winkel so gewählt ist, daß die Gleitfläche (7) auf der Druckseite größer ist als auf der Saugseite (γ 2 größer γ 1).

5. Turbinenschaufel nach den Ansprüchen 1 bis 4, dadurch gekennzeichnet, daß auf der schwalbenschwanzartigen Hintergreifung (6) des Kopfes (3) eine keramische Spritzschicht (8) aufgetragen ist.

6. Turbinenschaufel nach Anspruch 5, dadurch gekennzeichnet, daß die keramische Spritzschicht (8) aus Zirkoniumoxid ist.

7. Turbinenschaufel nach den Ansprüchen 1 bis 4, dadurch gekennzeichnet, daß an der schwalbenschwanzartigen Hintergreifung (6) dünne isolierende Zwischenlagen (9) angeordnet sind.

8. Turbinenschaufel nach Anspruch 7, dadurch gekennzeichnet, daß die Zwischenlage (9) aus Aluminiumtitanat besteht.

9. Turbinenschaufel nach den Ansprüchen 5 bis 8, dadurch gekennzeichnet, daß die keramische Spritzschicht (8) bzw. die isolierende Zwischenlage (9) den Stützkopf (3) vollständig umgreifend ausgebildet bzw. angeordnet ist.

10. Turbinenschaufel nach den Ansprüchen 1 bis 9, dadurch gekennzeichnet, daß das keramische Schaufelblatt (2) im Bereich der schwalbenschwanzartigen Hintergreifung (6) des Kopfes (3) einen radial äußeren erhabenen Kragen (10) aufweist, der mit dem Schaufelblatt (2) einstückig ausgebildet ist.

11. Turbinenschaufel nach den Ansprüchen 1 bis 10, dadurch gekennzeichnet, daß der Kern (4) in radialer Draufsicht elliptisch oder kreisrund und in Draufsicht bzw. Querschnitt kleiner als das Schaufelblattprofil (2) ausgebildet ist.

12. Turbinenschaufel nach den Ansprüchen 1 bis 10, dadurch gekennzeichnet, daß der Kopf (3) in Draufsicht bzw. Querschnitt größer als das Schaufelblattprofil (2) ausgebildet und in das Deckband (13) der Turbinenschaufel (1) integriert ist.

13. Turbinenschaufel nach Anspruch 1, dadurch gekennzeichnet, daß das Schaufelblatt (2) aus zwei Teilen besteht und daß beide Teile mit ihren Gleitflächen längs der Gleitflächen (5) an der schwalbenschwanzförmigen Hintergreifung (6) des Stützkopfs (3) relativ zueinander verschiebbar angeordnet sind.

14. Turbinenschaufel nach den Ansprüchen 1 bis 13, dadurch gekennzeichnet, daß sie im Bereich des Stützkerns (4) sich in Schaufellängsrichtung erstreckende Kühlluftkanäle (11) aufweist.

15. Turbinenschaufel nach den Ansprüchen 1 bis 14, dadurch gekennzeichnet, daß der Stützkopf (4) mit einer oberen Halterung, wie z. B. einem Deckband (13), durch Hochtemperaturlötung oder Schweißen (bei 16) fest verbunden ist.

16. Turbinenschaufel nach Anspruch 15, dadurch gekennzeichnet, daß der Stützkern (4) einen im Verhältnis zum Hohlraum im Schaufelblatt (2) kleinen Querschnitt aufweist und der Zwischenraum zwischen Stützkern (4) und Schaufelblatt (2) von Einlagen (15), wie Metallfilz, wenigstens teilweise ausgefüllt ist.

## Claims

1. Turbine blade subject to hot gases and comprising a metal supporting core (4) and surrounding ceramic blade (2), the supporting core being at its radially inner end positively held on the turbine disc and having at its radially outer end a widened-out head (3) on which, on radially inner faces (5), the ceramic blade (2) is braced on either side of the head (3) in a radial direction, the radially inner faces (5) of the head (3) being so constructed as to produce an undercut, characterised in that

a) corresponding sliding faces (5, 7) are constructed on the head (3) and on the ceramic blade (2),

b) the sliding faces (5, 7) extend substantially over the entire periphery of the ceramic blade (2),

c) the sliding faces (5, 7) are inclined at an angle ($\gamma$) to the axis of the turbine disc so that a swallow tail-like rearwards engaging shape (6) is created so that in operation, the thrust forces are exerted on the ceramic blade (2) transversely to the blade axis.

2. Turbine blade according to Claim 1, characterised in that the swallow tail-like rearwards engaging shape (6) is constructed symmetrically of the blade axis.

3. Turbine blade according to Claim 1 or 2, characterised in that in the case of a blade (2), the angle ($\gamma$) of the sliding faces (7) of the blade can be varied over the periphery to achieve an optimum distribution of stress over the blade (2).

4. Turbine blade according to Claim 3, characterised in that in the case of a blade (2), the angle is so chosen that the sliding face (7) on the pressure or outlet side is larger than on the suction or inlet side ($\gamma$ 2 greater than $\gamma$ 1).

5. Turbine blade according to Claims 1 to 4, characterised in that a ceramic coating (8) is sprayed onto the swallow tail-like part of the head (3) which is adapted for rearwards engagement at (6).

6. Turbine blade according to Claim 7, characterised in that the ceramic sprayed coating (8) is of zirconium oxide.

7. Turbine blade according to Claims 1 to 4, characterised in that thin insulating intermediate layers (9) are disposed on the swallow tail-like rearwards engaging part (6).

8. Turbine blade according to Claim 7, characterised in that the intermediate layer (9) is of aluminium titanate.

9. Turbine blade according to Claims 5 to 8, characterised in that the ceramic sprayed on coating (8) or the insulating intermediate layer (9) is constructed or disposed so as to engage completely over the supporting head (3).

10. Turbine blade according to Claims 1 to 9, characterised in that the ceramic blade (2) has in the region of the swallow tail-like rearwards engaging part (6) of the head (3) a radially outer raised collar (10) constructed in one piece with the blade (2).

11. Turbine blade according to Claims 1 to 10, characterised in that in radial plan view the core (4) is elliptical or circular and in plan or cross-section is smaller than the blade profile (2).

12. Turbine blade according to Claims 1 to 10, characterised in that in plan or cross-section the head (3) is larger than the blade profile (2) and is integrated into the shroud band (13) of the turbine blade (1).

13. Turbine blade according to Claim 1, characterised in that the blade (2) consists of two parts, both parts having their sliding faces (5) displaceable in relation to each other on the swallow tail-like rearwards engaging part (6) of the supporting head (3).

14. Turbine blade according to Claims 1 to 13, characterised in that in the region of the supporting core (4), it has cooling air passages (11) which extend in the longitudinal direction of the blade.

15. Turbine blade according to Claims 1 to 14, characterised in that the supporting head (4) is rigidly connected to a top holder such as, for example, a shroud band (13), by high temperature soldering or welding (at 16).

16. Turbine blade according to Claim 15, characterised in that the supporting core (4) has a small cross-section in proportion to the cavity in the blade (2) and in that the intermediate space between supporting core (4) and blade (2) is at least partially filled with inlays (15) such as metal felt.

## Revendications

1. Aube de turbine alimentée par des gaz chauds avec un noyau de support métallique (4) et une pale d'aube en céramique (2) l'entourant, le noyau de support étant maintenu par interpénétration de forme à son extrémité interne dans le sens radial sur la roue de turbine, et comportant à son extrémité externe dans le sens radial une tête élargie (3), contre laquelle prend appui dans le sens radial de part et d'autre de la tête (3) sur des surfaces (5) internes dans le sens radial, la pale (2) de l'aube à céramique, ces surfaces (5) internes dans le sens radial, de la tête (3) étant conformées de façon que soit créée une contre- dépouille, aube de turbine caractérisée en ce que :

a) des surfaces de glissement correspondantes (5, 7) sont ménagées sur la tête (3) et sur la pale (2) de l'aube en céramique,

b) les surfaces de glissement (5, 7) s'étendent en pratique sur la totalité de la périphérie de la pale (2) de l'aube en céramique,

c) les surfaces de glissement (5, 7) sont inclinées d'un angle ($\gamma$) par rapport à l'axe de la roue de la turbine, de sorte qu'il est créé une prise arrière en queue d'aronde (6) grâce à laquelle les efforts de pression en fonctionnement s'exercent sur la pale (2) de l'aube en céramique transversalement par rapport à l'axe de cette aube.

2. Aube de turbine selon la revendication 1, caractérisée en ce que la prise arrière en queue d'aronde (6) est symétrique par rapport à l'axe de l'aube.

3. Aube de turbine selon la revendication 1 ou 2, caractérisée en ce que pour une pale d'aube (2), l'angle ($\gamma$) des surfaces de glissement (7) de cette aube peut varier sur la périphérie, de sorte qu'une répartition optimale des contraintes est obtenue sur la pale d'aube (2).

4. Aube de turbine selon la revendication 3, caractérisée en ce que pour une pale d'aube (2), l'angle est choisi de façon que la surface de glissement (7) soit plus grande sur le côté où s'exerce la pression que sur le côté d'aspiration ($\gamma 2$ supérieur à $\gamma 1$).

5. Aube de turbine selon les revendications 1 à 4, caractérisée en ce que sur la prise arrière en queue d'aronde (6) de la tête (3) est déposée par projection une couche (8) en céramique.

6. Aube de turbine selon la revendication 5, caractérisée en ce que la couche en céramique (8) déposée par projection est constituée d'oxyde de zirconium.

7. Aube de turbine selon les revendications 1 à 4, caractérisée en ce que des couches intermédiaires isolantes, minces (9) sont disposées sur la prise arrière en queue d'aronde (6).

8. Aube de turbine selon la revendication 7, caractérisée en ce que la couche intermédiaire (9) est constituée de titanate d'aluminium.

9. Aube de turbine selon les revendications 5 à 8, caractérisée en ce que la couche en céramique déposée par projection (8) ou bien la couche intermédiaire isolante (9) est disposée de façon à entourer complètement la tête d'appui (3).

10. Aube de turbine selon les revendications 1 à 9, caractérisée en ce que la pale (2) de l'aube en céramique comporte dans la zone de la prise arrière en queue d'aronde (6) de la tête (3) un collet (10) faisant saillie radialement vers l'extérieur, formé d'une seule pièce avec la pale (2) de l'aube.

11. Aube de turbine selon les revendications 1 à 10, caractérisée en ce que le noyau (4) en vue de dessus radiale, est elliptique ou rond, et est en vue de dessus ou bien en coupe transversale plus petit que le profil de la pale (2) de l'aube.

12. Aube de turbine selon les revendications 1 à 10, caractérisée en ce que la tête (3), en vue de dessus ou bien en section transversale, est plus grande que le profil de la pale (2) de l'aube, et est intégrée dans la bande de recouvrement (13) des aubes (1) de la turbine.

13. Aube de turbine selon la revendication 1, caractérisée en ce que la pale (2) de l'aube est constituée de deux parties et que ces deux parties avec leur surface de glissement, sont disposées de façon à pouvoir coulisser l'une par rapport à l'autre le long des surfaces de glissement (5) sur la prise arrière en queue d'aronde (6) de la tête d'appui (3).

14. Aube de turbine selon les revendications 1 à 13, caractérisée en ce qu'elle comporte dans la zone du noyau de support (4) des canaux d'air de refroidissement (11) s'étendant en direction longitudinale de l'aube.

15. Aube de turbine selon les revendications 1 à 14, caractérisée en ce que la tête d'appui (3) est rendue solidaire d'une fixation supérieure, telle que par exemple une bande de recouvrement (13), par brasage à haute température ou bien par soudage (en 16).

16. Aube de turbine selon la revendication 15, caractérisée en ce que le noyau de support (4) a une section transversale réduite par rapport à l'espace creux dans la pale (2) de l'aube, et que cet espace intermédiaire entre le noyau de support (4) et la pale (2) de l'aube est au moins partiellement rempli par des intercalaires (15) tels qu'un feutre métallique.

0 118 020

Fig.1

Fig.3

Fig.2

Fig.4          Fig.5

Fig.7

Fig.6

SS = Saugseite
DS = Druckseite

14
Teilung der Schaufel

3

2

Kernbolzen 4

Deckband 13

SS

DS

Fig.8

3

Lötung 16

Deckband 13

$\gamma_1$

$\gamma_2$

2

Einlage 15

Befestigungsbolzen 4

3